(19) 

**Europäisches Patentamt**

**European Patent Office**

**Office européen des brevets**

(11)  **EP 4 153 885 B1**

(12)  **FASCICULE DE BREVET EUROPEEN**

(45)  Date de publication et mention de la délivrance du brevet:
**28.02.2024  Bulletin 2024/09**

(21)  Numéro de dépôt: **21732458.1**

(22)  Date de dépôt: **16.05.2021**

(51)  Classification Internationale des Brevets (IPC):
**F16G 13/20** (2006.01)    **B66F 3/06** (2006.01)
**F16H 55/30** (2006.01)

(52)  Classification Coopérative des Brevets (CPC):
**F16G 13/20; B66F 3/06; F16H 55/30**

(86)  Numéro de dépôt international:
**PCT/FR2021/050845**

(87)  Numéro de publication internationale:
**WO 2021/234253 (25.11.2021 Gazette 2021/47)**

(54)  **DISPOSITIF DE CHAÎNE DE POUSSÉE À PIGNON À DENTS LONGUES ASYMÉTRIQUES**

SCHUBKETTENVORRICHTUNG MIT EINEM ZAHNRAD MIT LANGEN ASYMMETRISCHEN ZÄHNEN

THRUST CHAIN DEVICE HAVING A TOOTHED SPROCKET WITH LONG ASYMMETRICAL TEETH

(84)  Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30)  Priorité:  **17.05.2020  FR 2004905**

(43)  Date de publication de la demande:
**29.03.2023  Bulletin 2023/13**

(73)  Titulaire: **Serapid - France**
**76370 Rouxmesnil Bouteilles (FR)**

(72)  Inventeur: **PREVOST, Romain**
**76370 Rouxmesnil-Bouteilles (FR)**

(74)  Mandataire: **Cabinet Netter**
**36, avenue Hoche**
**75008 Paris (FR)**

(56)  Documents cités:
**EP-A1- 1 006 074     FR-A1- 3 061 753**
**US-A- 4 521 993**

**Description**

L'invention concerne les machineries de déplacement de charges par poussée, et plus particulièrement les ensembles de transmission utilisés dans de telles machineries.

Dans les domaines où le déplacement de charges importantes sur de grandes courses est nécessaire alors que l'espace disponible est limité, il est connu d'utiliser des machineries à chaîne appelées *chaînes* rigides par exemple EP1006074A1. FR 2 786 476, au nom de la Demanderesse, décrit une colonne articulée élévatrice de charges mettant en oeuvre une chaîne rigide.

Les machineries à chaîne rigide, ou barre articulée, permettent de mettre en mouvement une chaîne pour la faire passer d'un état replié dans lequel elle occupe un encombrement faible à un état déployé sous la forme d'une structure rectiligne et rigide capable de supporter de fortes charges de compression. Par comparaison avec des systèmes à vérin, à bras ou à pantographe, une chaîne rigide présente un encombrement réduit à l'état replié pour une course de déploiement longue.

Les machineries à chaînes rigides sont, par exemple, utilisées dans l'industrie du spectacle pour déplacer des éléments de décors ou de scènes sur des courses importantes, à des vitesses élevées. Ce type de machinerie peut également être utilisé dans des industries de production, par exemple pour la fabrication à la chaîne de produits présentant des masses élevées.

La course de fonctionnement des chaînes rigides peut être adaptée à l'environnement d'utilisation en modifiant le nombre de maillons de la chaîne.

La Demanderesse a identifié un besoin de chaînes de poussée à puissance élevée, bruit et vibration réduits, durée de vie allongée et maintenance peu fréquente.

L'invention vient améliorer la situation.

La Demanderesse propose un dispositif de chaîne de poussée, comprenant une chaîne de poussée comprenant une portion droite selon un axe et une portion courbe, un guide de chaîne de poussée, un pignon d'entraînement pourvu de dents en prise avec la chaîne de poussée, le pignon d'entraînement étant en contact avec la chaîne de poussée par des surfaces de contact en développante de cercle, lesdites surfaces de contact appartenant aux dents, une dent engrenant la chaîne en définissant une ligne d'action présentant un angle avec l'axe de la portion droite compris entre -10° et 10°, en particulier proche de 0°. La chaîne comprend des maillons articulés sur des axes. La ligne d'action est décalée par rapport aux axes d'articulation de maillons, Le pignon d'entraînement est en contact avec la portion droite et sans contact avec la portion courbe. Le pignon d'entraînement est monté à rotation sur un axe situé du côté de la chaîne de poussée opposé au centre de courbure de la portion courbe. Lesdites surfaces de contact de chaque dent comprennent une surface avant convexe dirigée vers la portion droite lorsque la dent est en prise et une surface arrière convexo-concave dirigée vers la portion courbe lorsque la dent est en prise. La surface avant convexe occupe un angle supérieur à la moitié de l'angle occupé par la dent. Le long de l'axe de la portion droite, l'axe du pignon est disposé dans une zone comprise entre une limite entre la portion courbe et la portion droite et une distance maximale par rapport à ladite limite. Une dent exerçant un effort de poussée sur un angle epsilon de rotation du pignon et présentant un angle sigma d'une dent à une dent suivante avec sigma égal à 360°/n, n étant le nombre de dents du pignon, la différence epsilon-sigma est supérieure à 30°.

La somme des angles a occupés par les dents et des angles b occupés par les fonds arrondis séparant les dents est égale à 360°. On a donc a+b = 360°/n, avec n le nombre de dents. Avec un pignon de l'art antérieur, le contact entre la dent et la chaîne par un galet de la chaîne s'effectue sur un angle égal à a/2. Ledit angle est égal à ½ ((360°/n)-b). Avec un pignon selon l'invention, le contact entre la dent et la chaîne par un galet de la chaîne s'effectue sur un angle supérieur à a/2. Ledit angle peut dépasser la valeur de a tout en restant généralement inférieur ou égal à a. En d'autres termes, la position angulaire de l'extrémité libre de la surface de contact d'une dent peut se situer en arrière de la tangente entre le fond et la surface arrière de ladite dent et, en général, reste en avant de la position angulaire du centre du fond.

Lors de la poussée exercée par une dent sur un galet de la chaîne de poussée, dans le sens de rotation horaire, la vitesse linéaire V du galet selon l'axe Z est constante. Au point de contact appartenant à la surface de contact, on a $V = w_p \cdot R_i$, avec $R_i$ le rayon instantané ou distance entre le point de contact et l'axe de rotation du pignon et $w_p$ la vitesse angulaire instantanée au point de contact. $R_i$ est croissant et w est décroissant alors que la vitesse angulaire du pignon est constante. Ceci est permis par le profil en développante de cercle de la surface avant ou bord d'attaque de la dent formant surface de contact.

Un tel dispositif s'avère intéressant pour l'élévation de charges variables. L'usure est réduite. A l'asymétrie de chaque dent correspond l'asymétrie de la trajectoire des galets de la rangée de galets voisine du pignon, de part et d'autre du plan passant par l'axe de rotation du pignon et perpendiculaire à la portion droite de la chaîne de poussée, soit vers la partie courbe et à l'opposé de la partie courbe. Dans la portion droite, la distance entre les axes de deux galets successifs est constante. Dans la portion courbe, la distance entre les axes de deux galets successifs est variable. Ladite distance est croissante en s'éloignant du pignon, atteint un maximum, puis est décroissante vers la portion magasin. La croissance de ladite distance dans la moitié de la portion courbe voisine du pignon en allant en s'éloignant du pignon permet de dégager mutuellement les dents et les galets tout en conservant une distance entre les dents et les galets dans ladite portion courbe de la chaîne de poussée.

Un tel ensemble de transmission permet de soumettre la chaîne à des forces réparties sur plusieurs dents et à un endroit où la chaîne est guidée. Les composantes des forces transmises aux maillons voisins autres que celle de la direction de translation de la chaîne sont rendues négligeables. L'efficacité énergétique de la transmission est significativement supérieure à celle des transmissions connues jusqu'alors. A nombre de dents de pignon égal, le pignon est capable de transférer plus d'efforts à la chaîne. En d'autres termes, à diamètre primitif égal, le pignon peut recevoir plus de couple du moteur. La charge de la chaîne peut être augmentée. Les vibrations, l'usure et le bruit en fonctionnement sont très réduits par rapport aux installations connues.

Le pignon engrène avec des barreaux de la chaîne de poussée. Les barreaux sont disposés selon deux rangées, une côté intérieur de la portion courbe et l'autre côté extérieur de la portion courbe. Ainsi, le changement de pas des barreaux de la chaîne de poussée à l'extérieur de la portion courbe est mis à profit pour dégager les dents du pignon.

Dans un mode de réalisation, le diamètre des barreaux intérieurs est réduit, par exemple d'au moins 20%, par rapport au diamètre des barreaux extérieurs. L'espace pour les dents du pignon est augmenté.

Dans un mode de réalisation, le diamètre des barreaux intérieurs est variable le long de l'axe dudit barreau, par exemple un diamètre élevé dans les plaquettes de maillons et un diamètre faible au centre en regard et à distance des dents du pignon.

Dans un mode de réalisation, on augmente l'écartement entre les rangées de barreaux pour augmenter la longueur des dents du pignon.

L'augmentation de la longueur des dents est radiale et en développée. L'augmentation de la longueur radiale des dents permet une augmentation de l'angle occupé par le bord d'attaque de la dent. On peut passer d'un angle de a/2, à un angle de 2a/3, voire à 3a/4, voire à a c'est-à-dire un bord d'attaque occupant au moins l'angle de chaque dent. Cette forte augmentation réduit la charge supportée par chaque dent à nombre égal de dent.

Dans un mode de réalisation, lesdites surfaces de contact sont des surfaces de roulement.

Dans un mode de réalisation, lesdites surfaces de contact sont des surfaces de glissement.

Dans un mode de réalisation, le pignon d'entraînement est unique. Le pignon d'entraînement peut comprendre une ou plusieurs rangées de dents.

Dans un mode de réalisation, des pignons d'entraînement sont montés sur le même arbre

Dans un mode de réalisation, la différence epsilon - sigma est supérieure à 34°, plus préférablement supérieure à 40°.

Dans un mode de réalisation, la différence epsilon - sigma est supérieure à 46° pour des pignons d'au plus 12 dents.

Dans un mode de réalisation, la différence epsilon - sigma est supérieure à 49° pour des pignons d'au plus 6 dents.

Dans un mode de réalisation, la dimension radiale des dents est choisie de façon qu'au moins deux surfaces avant dudit pignon d'entraînement sont en contact simultané avec la chaîne de poussée sur un angle d'au moins 200° pour un pignon à 5 dents, d'au moins 250° pour un pignon à 6 dents, d'au moins 300° pour un pignon à 7 dents, d'au moins 340° pour un pignon à 8 dents

Dans un mode de réalisation, la dimension radiale des dents est choisie de façon qu'au moins trois surfaces avant dudit pignon d'entraînement sont en contact simultané avec la chaîne de poussée sur un angle d'au moins 20° pour un pignon à 9 dents, d'au moins 60° pour un pignon à 10 ou 11 dents, d'au moins 140° pour un pignon à 12 dents, d'au moins 180° pour un pignon ayant de 13 à 15 dents, d'au moins 260° pour un pignon ayant de 16 à 24 dents ; d'au moins 360° pour un pignon ayant de 25 à 48 dents,

Dans un mode de réalisation, le pignon comprend une denture droite incluant entre 5 et 30 dents. Un tel nombre de dents permet d'assurer une bonne continuité du mouvement entre la roue et la chaîne et d'éviter les mouvements incontrôlés lors du passage d'une dent à une autre et de limiter les vibrations et les bruits afférents.

Dans un mode de réalisation, le pignon comprend une denture droite présentant un module compris entre 3 et 64 millimètres.

Dans un mode de réalisation, la chaîne de poussée comprend des maillons et des axes sur lesquels les maillons sont montés, les axes étant en contact avec les dents, au moins deux des dents du pignon d'entraînement étant en contact avec un axe dans la portion droite, le nombre de dents du pignon étant d'au moins 8, voire 9, l'axe dans la portion droite et l'axe dans la portion courbe étant de rangs voisins.

Dans un mode de réalisation, la chaîne inclut des maillons articulés les uns avec les autres par des barreaux. Le barreau est monté fou sur des maillons de la chaîne. Le roulement entre la roue et les barreaux est favorisé par rapport aux frottements. L'usure au cours de l'utilisation de l'ensemble de transmission est réduite.

Dans un mode de réalisation, l'axe du pignon d'entraînement est disposé selon l'axe de la portion droite, dans un intervalle compris entre l'extrémité inférieure de la portion droite et l'extrémité inférieure de la portion droite augmentée de la longueur d'un maillon de la chaîne de poussée, de préférence entre l'extrémité inférieure de la portion droite et l'extrémité inférieure de la portion droite augmentée de 150% de la longueur d'un maillon de la chaîne de poussée.

Dans un mode de réalisation, le guide de chaîne de poussée est disposé du côté de la chaîne de poussée opposé au pignon d'entraînement.

Dans un mode de réalisation, le guide présente une surface rectiligne de guidage de la chaîne de poussée.

Dans un mode de réalisation, un guide supplémentaire est disposé sur l'extérieur de la partie courbe.

Dans un mode de réalisation, la surface avant convexe est dépourvue de méplat, chaque dent présente une pointe et un axe radial, la pointe étant décalée angulairement par rapport à l'axe vers la portion courbe.

Dans un mode de réalisation, l'effort exercé par une dent sur la chaîne de poussée est transféré sur la dent suivante sur une course de rotation du pignon supérieur à a/2, préférablement d'au moins 3a/8, plus préférablement d'au moins a. L'effort exercé par une des dents sur la chaîne de poussée est transféré sur la dent suivante sur une course de rotation du pignon d'entraînement d'au moins :

40° par tour pour un pignon à 6 dents ;

25° par tour pour un pignon à 12 dents;

16° par tour pour un pignon à 24 dents ;

12° par tour pour un pignon à 48 dents.

Dans un mode de réalisation, l'un au moins des barreaux comprend un corps sensiblement cylindrique et au moins une bague enfilée de manière libre en rotation autour du corps de manière à former un galet de guidage et/ou d'entraînement pour la chaîne. Les galets font alors office de pièce d'usure et peuvent être remplacés rapidement et facilement au cours d'opérations de maintenance sans démonter complètement la chaîne, ce qui réduit les coûts d'entretien.

Dans un mode de réalisation, l'axe de rotation du pignon est horizontal au cours du fonctionnement.

Dans un mode de réalisation, la portion de poussée est rectiligne.

Ledit guide peut comprendre des surfaces de contact en matériau synthétique.

Dans un mode de réalisation, le pignon d'entraînement présente une portance linéaire comprise entre 80 et 600 mm, voire 1000 mm. Par rapport à un pignon connu, le gain de portance linéaire est supérieur à 60% pour des pignons à 5 ou 6 dents, supérieur à 53% pour des pignons de 7 à 12 dents, supérieur à 47% pour des pignons de 13 à 24 dents supérieur à 45% pour des pignons de 25 à 48 dents.

Dans un mode de réalisation, le pignon d'entraînement présente un angle phi occupé par le flanc d'attaque de la dent supérieur à 5 degrés, notamment pour 48 dents, préférablement supérieur à 11 degrés, notamment pour 24 dents, plus préférablement supérieur à 23 degrés, notamment pour 12 dents, plus préférablement supérieur à 47 degrés, notamment pour 6 dents.

Dans un mode de réalisation, le pignon d'entraînement présente un positionnement du pignon en hauteur H compris entre 0 et 1,5 pas.

Dans un mode de réalisation, le pignon d'entraînement présente une largeur des joues Lj comprise entre 30 et 150 mm, préférablement entre 40 et 120 mm.

D'autres caractéristiques, détails et avantages de l'invention apparaîtront à la lecture de la description détaillée ci-après, et des dessins annexés, sur lesquels :

[Fig. 1] est une vue de côté d'un dispositif de chaîne rigide selon un aspect de l'invention, avec un pignon à 6 dents, le profil d'un pignon conventionnel étant également représenté à des fins explicatives,

[Fig. 2] est une vue de détail de la figure 1 à une position angulaire de pignon différente,

[Fig. 3] est une vue de côté d'un dispositif de chaîne rigide avec un pignon dont le bord d'attaque occupe un premier angle supplémentaire,

[Fig. 4] est une vue de côté d'un pignon dont le bord d'attaque occupe un deuxième angle supplémentaire,

[Fig. 5] est une vue de côté d'un pignon dont une dent a été isolée pour la visibilité des paramètres dimensionnels,

[Fig. 6] est une vue de côté d'un pignon dont la portée linéaire d'une dent et plusieurs positions successives d'une dent sont montrées,

[Fig. 7] est une vue de côté d'un dispositif de chaîne rigide avec un pignon, le pas et la hauteur étant illustrés, la largeur de joue de chaîne est supérieure à celles de la figure 3 ; et

[Fig. 8] est une vue de côté d'un dispositif de chaîne rigide avec un pignon à 9 dents.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Le profil d'un pignon engrenant avec une chaîne diffère largement du profil de deux engrenages engrenant ensemble. La chaîne présente des barreaux cylindriques de révolution entrant en contact avec les dents du pignon. Les barreaux sont montés libres pour pouvoir tourner au contact du pignon. Le diamètre de barreau et la distance entre les axes de deux barreaux consécutifs sont des paramètres de la chaîne impactant le pignon. Le pignon se caractérise notamment par le nombre de dents, le diamètre, l'ouverture entre deux dents voisines et l'angle de poussée. FR 2 780 472 décrit un entraînement de chaîne de poussée comprenant un pignon muni de galets montés fous entre deux flasques munis de dents à raison d'un galet par dent de pignon. La chaîne de poussée est laissée libre dans sa partie courbe. La poussée s'exerce sur les axes de la chaîne selon une direction éloignée de la direction de translation de la chaîne.

La Demanderesse cherche à réduire le bruit, les vibrations et l'usure. L'atteinte de ce but permet d'étendre les secteurs susceptibles d'utiliser des chaînes de poussée, par exemple utilisant antérieurement d'autres technologies, par exemple à câble ou à courroie.

A cette fin, la Demanderesse, au-delà des améliorations incrémentales a cherché à comprendre les limitations des mécanismes actuels. En partant de la forme de pignon et de chaîne illustrée dans FR 3 061 753, on bénéficie d'un bon alignement entre la ligne d'action et l'axe de la portion droite. En conservant cette propriété, il est apparu que la symétrie de chaque dent autour d'un plan passant par l'axe de rotation était utile pour garantir l'absence d'interférence géométrique entre la dent et la chaîne et, bien entendu, obtenir le contact souhaité pour l'entraînement. Ainsi la dent suivant la dent en prise est sans interférence avec le galet suivant de la chaîne et se rapproche progressivement pour venir en contact puis en prise à son tour.

A ce stade, la Demanderesse a procédé à des analyses poussées des phénomènes vibratoires et a identifié qu'une part importante des vibrations se produisait lors du départ abrupt du profil de pignon lorsque la charge supportée par la chaîne passe à la dent suivante. Il a alors été recherché un contact prolongé pour un support simultané par plusieurs dents répartissant ainsi la charge. Pour cela, augmenter le diamètre primitif du pignon et le nombre de dents du pignon a été envisagé mais cela impliquait un encombrement accru du pignon, une augmentation du couple d'entraînement du pignon à charge égale et un changement de motorisation.

La Demanderesse a alors cherché une voie permettant de conserver le diamètre primitif du pignon et son nombre de dents. Il a été conçu d'allonger les dents du pignon, d'admettre une dissymétrie du profil des dents et de changer le positionnement du pignon en direction de l'extrados de la portion courbe. Allonger les dents pose une difficulté d'interférence avec le galet voisin de celui avec lequel la dent va entrer en prise. Rendre la dent dissymétrique pose aussi des difficultés d'interférence. Changer le positionnement du pignon vers l'extrados de la portion courbe tend à réduire la course au cours de laquelle il existe un contact opérationnel galet-dent. La Demanderesse s'est rendu compte qu'il était souhaitable de guider linéairement la joue de chaîne dans sa partie verticale tout en exerçant une poussée par la dent du pignon. La partie courbe est guidée tout en étant libre de poussée par la dent du pignon. Il est souhaitable d'éviter de transmettre des efforts au guide de la partie courbe.

La Demanderesse au cours de ses recherches s'est rendu compte qu'il existait une zone pour positionner le pignon de manière intéressante. L'axe du pignon est positionné à la même distance de l'axe de la partie droite de la chaîne que l'axe d'un pignon antérieur présentant le même nombre de dents et le même diamètre primitif et coopérant avec une chaîne de même pas et à galets de même diamètre. Le pas est la distance, selon l'axe de la partie droite, entre deux axes de galets de la chaîne, notamment entre deux axes de galets disposé du côté de la chaîne proche du pignon.

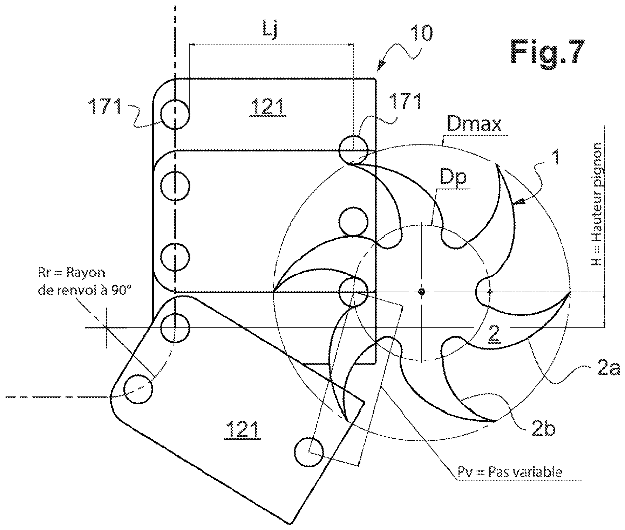

Dans FR 3 061 753, le point de contact le plus bas entre une dent et un galet est aussi situé à distance de la partie courbe. En pratique, ledit point de contact était au-dessus de la partie courbe. L'axe du pignon 1 selon l'invention est positionné le long de l'axe de la partie droite 10a de la chaîne à faible distance de la partie courbe 10b. Le point de contact le plus bas entre une dent 2 et un galet 171 est distant de la partie courbe 10b. Le point de contact le plus bas entre une dent 2 et un galet 171 est au-dessus de la partie courbe 10b, voir notamment figure 7. L'axe du pignon 1 selon l'invention est positionné le long de l'axe de la partie droite 10a de la chaîne 10 entre la limite 30 séparant la partie courbe 10b et la partie droite 10a et une distance supérieure à un demi-pas à partir de ladite limite 30 à l'opposé de la partie courbe 10b. Ladite distance peut-être comprise entre plus de zéro et un pas et demi. On définit un repère orthogonal XYZ avec X un axe parallèle à l'axe de rotation du pignon 1, Z l'axe de translation de la partie droite 10a et Y un axe perpendiculaire à X et Z. Les axes X et Y sont horizontaux et l'axe Z vertical dans la plupart des situations. En d'autres termes, l'axe du pignon 1 est disposé dans une zone comprise entre une limite 30 séparant la portion courbe 10b et la portion droite 10a et une distance maximale par rapport à ladite limite 30, la distance maximale étant supérieure à zéro, inférieure ou égale à 1,5 pas, préférablement égale à un demi-pas.

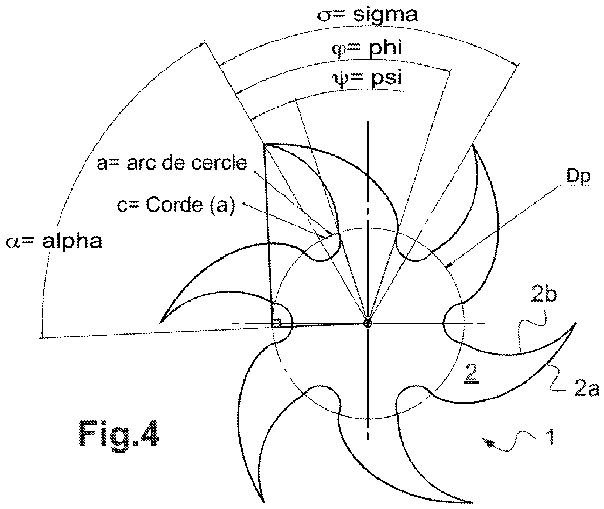

Ladite distance permet au flanc d'attaque 2a ou flanc de charge d'une dent 2 de supporter le ou les galets 171 situés au-dessus de l'axe du pignon 1 sur un parcours angulaire plus élevé. Ladite distance permet aussi au galet 171 situé dans la partie courbe 10b de se rapprocher du flanc d'attaque 2a d'une dent 2 sans interférer avec le flanc de fuite 2b ou la pointe de la dent 2 précédente dont le flanc d'attaque 2a est déjà en prise avec le galet 171 précédent, dans le sens horaire de rotation du pignon 1 correspondant sur les figures à une élévation de la chaîne. Dans le sens anti horaire, le galet 171 s'échappe dans un sens opposé à la dent 2. En d'autres termes, au lieu que le galet 171 poursuive sa course selon la portion droite 10a avec une composante nulle selon l'axe Y comme dans l'art antérieur, le galet 171, selon l'invention, présente une vitesse non nulle selon l'axe Y dans le sens opposé à la composante de vitesse selon l'axe Y de la dent 2 correspondante. Le flanc d'attaque 2a présente un profil convexe. La courbure du flanc d'attaque 2a est choisie pour éviter une variation de vitesse de la chaîne et une variation de couple du moteur. Le flanc de fuite 2b présente un profil concave, en partie concave et en partie droite, ou en partie concave et en partie convexe. Le flanc de fuite 2b peut présenter un profil en partie symétrique du flanc d'attaque 2a à proximité de la base de la dent 2, et en partie concave à distance de la base de la dent 2. Dans un autre mode, le profil du flanc de fuite 2b est en partie symétrique du flanc d'attaque 2a à distance de l'extrémité de la dent 2 et en partie concave à proximité de l'extrémité de la dent 2, voir figures 4 et 7. Le flanc d'attaque 2a ou surface avant convexe occupe un angle supérieur à la moitié de l'angle occupé par la dent 2. Le flanc d'attaque peut occuper un angle supérieur à 5 degrés, notamment pour 48 dents. Le flanc d'attaque peut occuper un angle supérieur à 11 degrés, notamment pour 24 dents. Le flanc d'attaque peut occuper un angle supérieur à 23 degrés, notamment pour 12 dents. Le flanc d'attaque peut occuper un angle supérieur à 47 degrés, notamment pour 6 dents.

Le flanc d'attaque 2a est orienté vers la partie droite 10a. Le flanc de fuite 2b est orienté vers la partie courbe 10b. Le pignon 1 peut travailler en compression et en traction.

La proximité entre le renvoi ou partie courbe 10b et le pignon 1, selon l'axe Y, axe de la portion droite, permet de mettre à profit l'ouverture des maillons de chaîne et donc d'écarter les galets 171 les uns des autres pour le passage entre deux galets 171 successifs d'une dent 2 longue. La dent 2 est longue en ce sens qu'elle est plus longue que la dent d'un pignon connu pour chaîne tant radialement que par son flanc d'attaque 2a. Le flanc d'attaque 2a est prolongé en distance développée et en encombrement angulaire. Le flanc d'attaque 2a s'étend angulairement sur une plage supérieure à la moitié de la dimension angulaire de la dent 2. Pour un pignon à 6 dents, le flanc d'attaque 2a s'étend sur plus de 30°, voire plus de 60°, préférablement entre 40 et 55°. Pour un pignon à 5 dents, le flanc d'attaque 2a s'étend sur plus de 36°, voire plus de 72°, préférablement entre 50 et 65°. Pour un pignon à 7 dents, le flanc d'attaque 2a s'étend sur plus de 25°, voire plus de 51°, préférablement entre 30 et 45°. Pour un pignon à 8 dents, le flanc d'attaque 2a s'étend sur plus de 22,5°, voire plus de 45°, préférablement entre 28 et 40°.

Ainsi, dans le sens horaire de rotation du pignon 1, une dent 2 reste sous charge du galet sur un parcours angulaire plus long et une durée plus longue à vitesse de rotation égale. La perte de contact entre une dent 2 et le galet 171 correspondant est plus éloignée du point de départ du flanc d'attaque 2a de la dent 2 suivante. En généralisant à un pignon 1 à n dents, chaque dent 2 occupe un angle de 360°/n-b. Dans une hypothèse simple où chaque dent 2 possède un flanc d'attaque 2a occupant 75% de l'angle a occupé par la dent 2, le flanc d'attaque 2a est prolongé angulairement de 50%. Si le flanc d'attaque 2a occupe 100% de l'angle a occupé par la dent 2, le flanc d'attaque 2a est prolongé angulairement de 100% par rapport à une dent symétrique. L'augmentation du parcours angulaire au cours duquel un galet est entraîné par une dent 2 permet de ménager un appui simultané de deux galets sur deux dents successives et une transition douce entre un appui nul et un appui maximal pour la dent 2 entrante et entre un appui maximal et un appui nul pour la dent 2 sortante.

La transition peut être prévue sur une zone angulaire de plusieurs degrés. La zone angulaire de transition peut être comprise entre 1°, préférablement 5° et la valeur de prolongement du flanc d'attaque 2a ci-dessus soit a/4 pour un prolongement de 50%. L'engrènement devient plus souple et doux. Les pics vibratoires ont une accélération réduite d'au moins 10 à 30%, une vitesse réduite d'au moins 10 à 30% et un déplacement réduit d'au moins 60 à 90% selon le mode de fonctionnement en montée et en descente et selon la vitesse. Le comportement d'un pignon 1 selon l'invention se rapproche de celui d'un pignon ayant une ou deux dents de plus en termes de vibrations tout en conservant le même couple demandé au moteur pour un pignon à 6 dents et au moins deux dents de plus pour un pignon à 12 dents ou plus. En outre, les vibrations se traduisant par une usure de la chaîne et des surfaces de pignon, on obtient aussi une réduction du phénomène de matage des surfaces en contact d'où une durée de vie accrue.

Le dispositif de chaîne de poussée comprend une chaîne ouverte de poussée. On entend ici par ouverte une chaîne à extrémités séparées. La chaîne comprend une portion droite ou portion de poussée 10a, une portion magasin 10c et un renvoi ou portion courbe 10b entre la portion de poussée 10a et la portion magasin 10c. Le dispositif comprend un guide 20 de chaîne de poussée sur la portion courbe 10b. La portion droite est en général verticale et guidée pour reprendre des efforts transversaux, en général horizontaux. Le dispositif comprend un pignon 1 d'entraînement pourvu de dents 2 en prise avec la chaîne de poussée, dans la portion droite 10a. Le pignon 1 comprend une ou plusieurs rangées de dents 2. Une rangée regroupe les dents 2 situées dans un même plan. Le dispositif comprend un espace de stockage de la portion magasin 10c. Ledit espace de stockage peut être parallèle à la portion droite 10a et situé à l'opposé de la portion droite 10a par rapport au centre de courbure de la portion courbe 10b.

Le pignon 1 d'entraînement est en prise avec la chaîne de poussée du côté opposé à la portion magasin 10c, en compression et le cas échéant en traction. Le pignon 1 d'entraînement est en contact avec la chaîne de poussée par des surfaces en développante de cercle, lesdites surfaces appartenant aux dents 2, une dent 2 engrenant la chaîne en définissant une ligne d'action présentant un angle avec la portion de poussée comprise entre -10° et 10°, préférablement au voisinage de 0°.

Préférablement, la ligne d'action présente un angle avec la portion de poussée comprise entre -2° et 2°, mieux encore entre -1 et 1°. Les efforts subis par le guide 20 sont faibles, en première approximation bornés par le sinus de l'angle ci-dessus, soit inférieurs à 3,5 % de l'effort de poussée de la chaîne. Les surfaces de contact offrent un frottement faible et une usure négligeable de la chaîne tout en subissant elles-mêmes une usure compatible avec des visites de maintenance espacées.

Comme illustré sur les figures, un pignon 1 denté est monté à rotation autour d'un axe parallèle à l'axe X. Des surfaces d'engrènement circulaires 100 appartenant à la chaîne 10 sont montées à translation selon un axe Z. Ici, le terme axe est employé dans son sens géométrique. Dans le cas des modes de réalisation décrits ci-avant, les surfaces d'engrènement circulaires 100 correspondent aux contours circulaires de barreaux 11 vus de profil. L'axe X correspond à la direction principale de l'arbre moteur ou axe du pignon. L'axe Z correspond à la direction verticale le long de laquelle se déplacent les surfaces d'engrènement circulaires 100 portées par les barreaux 11.

Les surfaces d'engrènement circulaires 100, représentées par des cercles dont les centres sont référencés $C_{n-1}$, $C_n$, et $C_{n+1}$, sont portées directement par le corps des barreaux 11 dépourvus de bagues ou par des organes intermédiaires, tels que les galets, supportés par les corps des barreaux 11 et formant des rouleaux d'entraînement.

L'axe de rotation du pignon 1 et l'axe de translation des surfaces d'engrènement circulaires 100 sont orthogonaux et distants l'un de l'autre d'une distance égale au rayon primitif Rp.

Au cours du mouvement d'engrènement, au moins deux dents 2 du pignon 1 sont en contact avec une surface d'engrènement circulaire 100. Les dents 2 étant à denture droite et les surfaces d'engrènement circulaires 100 étant mobiles orthogonalement à l'axe X, le contact s'établit sur une ligne s'étendant selon l'axe X. Vu selon le plan des figures, le contact peut donc être représenté par un point de contact référencé M. La liaison est linéique rectiligne.

En mécanique, l'un des cas les plus communs d'une transmission de mouvement est celui consistant à transformer un mouvement de rotation en un autre mouvement de rotation. Une transmission connue comprend une première roue dentée à denture droite et une seconde roue dentée à denture droite engrenant ensemble en formant un engrenage droit pour transformer une première rotation en une seconde rotation. Dans la littérature, ce type d'engrenage simple sert de référence pour définir d'autres types d'engrenages. Certains termes techniques seront utilisés, par analogie, pour décrire l'engrenage de la chaîne de poussée.

Dans le cas présent, l'ensemble transforme un mouvement de rotation autour de l'axe X en un mouvement de translation le long de l'axe Z. En cela, le dispositif présente une analogie avec un engrenage pignon-crémaillère. Néanmoins, les surfaces d'engrènement circulaires 100 se distinguent du profil des crémaillères conventionnelles. L'engrènement entre des profils de dents 2 d'une part et des surfaces d'engrènement circulaires 100 d'autre part confère donc à l'engrenage du dispositif des propriétés d'engrènement distinctes des engrenages pignon-crémaillère. Ici, les barreaux 11 assurent deux fonctions distinctes, à savoir :

- former ou porter les surfaces d'engrènement circulaires 100 venant au contact des dents 2 du pignon 1, et

- assurer une bonne liaison entre les deux plaquettes 121 d'un même maillon et donc assurer une bonne stabilité de la chaîne.

Le pignon 1 engrène avec la portion droite rectiligne, ici verticale. Par conséquent, le mouvement des barreaux 11 au cours de l'engrènement est une translation en partie haute et une rotation en partie basse. Ce mouvement complexe de translation et de rotation distingue l'engrenage de la chaîne 10 des systèmes conventionnels comprenant une chaîne fermée dont une portion courbe s'enroule autour d'une poulie dentée, à l'image des systèmes d'accouplement à chaîne de traction ou d'entraînement de bicyclettes, ainsi que des chaînes de poussée dont seule une partie rectiligne est en engagement avec le pignon. Le pignon 1 engrène sur la face de la portion droite 10a et de la portion courbe 10b opposée au centre de courbure de la portion courbe 10b. La portion magasin 10c est disposée dans un espace de stockage.

En résumé, l'engrènement de la chaîne 10 ne peut être assimilé ni à celui des crémaillères, ni à celui des chaînes à rouleaux conventionnelles.

La combinaison du mouvement complexe rectiligne et pivotant, et du profil circulaire des barreaux 11 confère à l'engrènement de l'ensemble de transmission 1 de hautes performances vibratoires - des vibrations de faible amplitude - permettant soit une vitesse élevée, soit une charge élevée, soit un silence de fonctionnement, soit un entraînement compact, soit une combinaison des précédents, particulièrement adaptées aux machineries à chaîne rigide.

L'axe Z correspond à la droite de contact le long de laquelle la vitesse tangentielle du pignon 1 est égale à la vitesse linéaire des surfaces d'engrènement circulaires 100. Par conséquent, le rayon primitif Rp ou distance séparant la droite de contact et l'axe de rotation du pignon 1 peut être assimilée au rayon primitif du pignon 1 égal à la moitié du diamètre primitif Dp. La droite de contact peut être assimilée à la ligne primitive de la portion droite 10a de la chaîne 10 par analogie avec un engrenage pignon-crémaillère. Le rayon primitif du pignon 1 est la distance entre l'axe de rotation du pignon 1 et l'axe du galet au plus proche dudit axe de rotation, i.e. dans la position où l'axe du galet est dans le plan X-Y passant par ledit l'axe de rotation. Le module m du pignon 1 et le module m de la chaîne 10 sont égaux. Le pas p du pignon 1 et le pas de la chaîne 10 sont égaux. Le pas p est défini comme la longueur de l'arc pris sur le cercle primitif du pignon 1 entre deux points de flancs d'engrènement similaires de deux dents 2 successives. Le pas p et le module m sont liés par l'égalité suivante : p = m*Pi.

Lors de l'engrènement, un contact est établi entre le flanc d'engrènement du profil d'une dent 2 et les surfaces d'engrènement circulaires 100. Vu de profil, le contact entre deux surfaces convexes permet de définir une droite tangente représentée sur les figures par une tangente de contact 181. La tangente de contact 181 est en trait tireté. Au cours de l'engrènement, le point de contact M se déplace selon une droite théorique appelée ligne d'action et référencée 182. Mécaniquement, la ligne d'action 182 représente la direction des forces transmises d'un organe engrenant à l'autre via le point de contact M.

La ligne d'action 182 est sensiblement perpendiculaire à la tangente de contact 181. Dans les engrenages conventionnels à deux roues dentées dont les dentures présentent des profils en développante de cercle conjugués, la tangente de contact forme un angle de pression avec la direction de l'entraxe, c'est-à-dire la droite reliant les centres de chacune des deux roues dentées. La ligne d'action forme donc un angle de pression $\pm$ Pi/2 avec la direction de l'entraxe.

Dans les engrenages à roue dentée et crémaillère dont les dentures présentent des profils en développante de cercle conjugués, la crémaillère peut être assimilée à une roue dentée de rayon infini. La droite s'étendant selon la direction de translation de la crémaillère et correspondant au cercle primitif de la roue dentée de rayon infini est alors appelé ligne de référence ou ligne primitive. Dans ce cas, la ligne d'action forme un angle de pression avec la ligne de référence. La tangente de contact forme donc un angle de pression $\pm$ Pi/2 avec la ligne de référence.

Les dentures à profil en développante de cercle conjugués, qu'il s'agisse d'engrenages de type roue-roue ou roue-crémaillère, présentent des propriétés améliorées par rapport aux premiers systèmes de transmission par obstacles, notamment ceux attribués à Léonard de Vinci. Une première propriété est de présenter une transmission sensiblement homocinétique : si la vitesse de l'un des organes de l'engrenage est constante, alors la vitesse de l'autre organe est aussi constante. Une seconde propriété est que l'angle de pression est sensiblement constant au cours de l'engrènement, aux tolérances d'usinage près et aux phénomènes de début et de fin de contact près. Une troisième propriété est de favoriser le contact par roulement sans glissement entre deux surfaces convexes. La transmission du mouvement présente alors une bonne continuité, une bonne homogénéité. En outre, l'usure par frottement est limitée.

Pour résister à des efforts importants et éviter une fragilisation de la crémaillère, les dents à profil en développante de cercle sont généralement tronquées. Autrement dit, l'extrémité radiale de chaque dent est écrêtée et l'usinage du fond de denture (entre deux dents) n'est pas réalisé jusqu'au fond. Ainsi, les dents présentent une extrémité radiale sensiblement aplanie ou arrondie plutôt qu'une pointe aigue et le fond de denture présente une forme femelle sensiblement correspondante pour les mêmes raisons. Ces adaptations des profils en développante de cercle conjugués limitent aussi les phénomènes de glissement spécifique. Par contre, l'interférence de fonctionnement qui apparaît au début et à la fin du contact entre deux dents conjuguées, appelés aussi phase d'approche et phase de retrait, dans les mécanismes connus, est ici traitée par le positionnement bas du pignon 1 de façon que la phase d'approche se déroule dans la portion courbe 10b de la chaîne 10. Ledit positionnement bas permet de limiter l'écrêtage des dents 2.

La valeur de l'angle de pression est généralement fixée par des normes. Cette valeur est, par exemple, nominalement à 20° selon les normes européennes et à 25° selon les normes des États-Unis. Certains engrenages, notamment anciens, prévoient exceptionnellement une valeur de 14,5°. Fixer une valeur standard permet en outre de fabriquer (d'usiner) des organes d'engrenage tels que roues et crémaillères au moyen d'un outil unique. Autrement dit, concevoir un engrenage dont l'angle de pression serait différent des standards impliquerait de concevoir un outil d'usinage dédié, ce qui est complexe et coûteux. Enfin, la conception d'engrenages est généralement réalisée aux moyens d'abaques mettant en relation un grand nombre de paramètres tels que le nombre de dents, le module, etc. Ces abaques sont établis sur la base d'un angle de pression standard. Il est généralement déconseillé à un technicien de s'en éloigner.

Dans les modes de réalisation, les dents 2 du pignon 1 coopèrent opérationnellement avec des barreaux 11 présentant un profil d'engrènement circulaire. Les phénomènes de glissement spécifiques et d'interférence de fonctionnement sont, ici, évités, y compris lors des phases d'approche et de retrait.

Le pignon 1 comprend, par exemple, entre cinq et trente dents 2. Dans les exemples, le pignon 1 est conformé en une roue à six dents 2. Le pignon 1 est similaire, dans sa forme, à une roue dentée à profil en développante de cercle conjuguée à une crémaillère de pas p. Les dents 2 présentent un flanc d'attaque 2a et un flanc de fuite 2b. La notion d'attaque et de fuite est relative à l'effort exercé entre le pignon 1 et la chaîne 10. Les dents 2 sont sensiblement pointues. Le rayon primitif Rp du pignon 1 est ajusté de sorte que l'angle de pression au point de contact soit sensiblement nul. Ici, le rayon primitif Rp est inférieur à la distance correspondant à un angle de pression standard à 20° ou 25°. La valeur du rayon primitif Rp est sélectionnée en fonction des dimensions des organes, notamment du diamètre des barreaux 11 et du pas p. Par exemple, le pas p est compris entre 10 et 200 millimètres. Le module m est compris entre 10/Pi et 200/Pi millimètres, soit environ entre 3 et 64 millimètres. On note également R le rayon de la portion courbe 10b, $r_g$ le rayon des galets 171, D le diamètre du cercle ayant pour centre l'axe de rotation d'un galet 171 de la rangée opposée au pignon 1 et passant par les axes de rotation des galets 171 voisins de la rangée proche du pignon 1.

Le tableau suivant présente quelques exemples de valeurs de rayon primitif Rp, données en millimètres, en fonction du pas p indiqué en millimètres dans la colonne de gauche et du nombre n de dents indiqué en première ligne.

[Tableau 1]

| Nb n dents | 5 | 6 | 8 | 9 | 10 | 12 | 15 |
|---|---|---|---|---|---|---|---|
| p = 20 mm | 15,915 | 19,099 | 25,465 | 28,648 | 31,831 | 38,197 | 47,746 |
| p = 30 mm | 23,873 | 28,648 | 38,197 | 42,972 | 47,746 | 57,296 | 71,620 |
| p = 40 mm | 31,831 | 38,197 | 50,930 | 57,296 | 63,662 | 76,394 | 95,493 |
| p = 50 mm | 39,789 | 47,746 | 63,662 | 71,620 | 79,577 | 95,493 | 119,366 |
| p = 60 mm | 47,746 | 57,296 | 76,394 | 85,944 | 95,493 | 114,592 | 143,239 |
| p = 80 mm | 63,662 | 76,394 | 101,859 | 114,592 | 127,324 | 152,789 | 190,986 |
| p = 90 mm | 71,620 | 85,944 | 114,592 | 128,916 | 143,239 | 171,887 | 214,859 |
| p = 100 mm | 79,577 | 95,493 | 127,324 | 143,239 | 159,155 | 190,986 | 238,732 |

Les combinaisons de valeurs proposées sont des exemples de modes de réalisation de l'invention. Elles correspondent à un angle de pression dont la valeur absolue est proche de zéro.

L'engrenage représenté, comprenant les dents 2 du pignon 1 et les surfaces d'engrènement circulaires 100 conjuguées, présente donc un angle de pression alpha sensiblement nul. Autrement dit, la ligne d'action forme un angle sensiblement nul avec la direction de translation d'une portion de poussée 10a de la chaîne 10. La ligne d'action est sensiblement parallèle à l'axe Z. La tangente de contact forme un angle sensiblement droit (angle de pression $\pm$ Pi/2) avec la direction de translation de la portion de poussée 10a de la chaîne 10. En pratique, compte tenu des tolérances d'usinage, l'angle est inférieur à 5° en valeur absolue.

Dans des variantes, l'angle de pression présente une valeur absolue inférieure aux valeurs standards précitées mais supérieure à 0. Par exemple, l'angle de pression peut être compris entre -10° et 10°, ou entre -5° et 5°, entre -2° et 2°, ou encore entre -1° et 1°. La tangente de contact 181 forme alors un angle (alpha $\pm$ Pi/2) avec la direction de translation de la portion de poussée 10a de la chaîne 10 compris respectivement entre 80° et 100°, entre 85° et 95°, entre 88° et 92°, entre 89° et 91°.

Dans les exemples représentés, l'espace entre les surfaces d'engrènement circulaires 100 portées par les barreaux 11 est libre. Il n'y a pas de « fond » reliant un barreau externe 11 à un autre. Le mouvement des dents 2 du pignon 1 au cours du mouvement d'engrènement est libre.

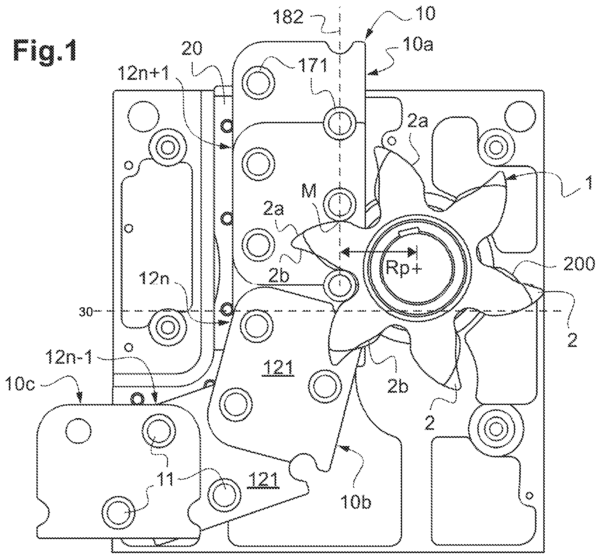

Ici, l'extrémité radiale des dents 2 est pointue en théorie et usinée avec un congé en production. L'extrémité radiale des dents 2 n'est pas écrêtée. Selon l'invention, on cherche à obtenir plusieurs contacts simultanés, préférablement un ou deux de plus que dans l'art antérieur dans lequel un seul contact était recherché pour réduire les vibrations et bruits parasites, cf figure 1. En outre, lorsque le point de contact $M_{n+1}$ s'approche de l'extrémité d'une dent $2_{n+1}$, en haut sur les figures, un nouveau point de contact $M_n$ est déjà établi entre le couple dent $2_n$/surface d'engrènement circulaire $100_n$ suivant, et ainsi de suite. Le bord d'attaque occupe un secteur angulaire important supérieur à la moitié du secteur angulaire d'une dent 2 et pouvant théoriquement s'étendre au-delà du secteur angulaire d'une dent 2, quoiqu'en pratique, le secteur angulaire d'une dent 2 constitue en général une limite facilitant le dessin de la dent 2. Ainsi lorsque le point de contact $M_{n+1}$ s'approche de la moitié du secteur angulaire d'une dent $2_{n+1}$, un nouveau point de contact $M_n$ s'établit entre le couple dent $2_n$/surface d'engrènement circulaire $100_n$ suivant, et ainsi de suite. L'effort est partagé et transféré progressivement au nouveau couple $2_n/100_n$ d'où une réduction de la dérivée des efforts au point de contact M et donc des vibrations.

Dans l'exemple représenté, les fonds de dent 2 du pignon 1 sont usinés selon un profil sensiblement circulaire de diamètre égal ou supérieur au diamètre des surfaces d'engrènement circulaires 100. Ainsi, aux tolérances d'usinage près, chaque surface d'engrènement circulaire 100 vient se loger dans un fond entre deux dents 2 avant d'être entraînée par la dent 2 aval.

Dans les exemples décrits ici, les barreaux 11 sont montés fous par rapport aux maillons 12 de la chaîne 10. Ainsi, lors de l'engrènement, le roulement du barreau externe 11 contre la surface d'engrènement de la dent 2 est facilité. Les frottements sont réduits. L'usure des barreaux 11, comme celle des dents 2, est réduite. En variante, les barreaux 11 sont montés fixes par rapport à l'un des deux maillons 12 qu'ils relient. Dans ce cas et lorsque le contact est réalisé directement sur une surface d'engrènement circulaire 100 bloquée en rotation, des phénomènes de glissement apparaissent lors de l'engrènement. La fabrication de la chaîne 10 peut néanmoins s'en trouver facilitée. Par exemple, un maillon 12 et un barreau externe 11 peuvent être formés d'un seul tenant ou soudés ensemble.

Le dispositif tel que décrit jusqu'ici permet de générer peu de forces radiales dans l'engrenage. Les forces radiales sont essentiellement orientées selon la direction Y. Ceci permet de stabiliser encore la chaîne 10 lors de son mouvement et d'éviter des vibrations transmises à la chaîne 10 par le pignon 1, en particulier lorsque des vitesses élevées sont mises en oeuvre.

Les principes généraux de fonctionnement, et notamment la cinématique de la machinerie sont décrits dans FR 2 786 476 que le lecteur est invité à consulter.

La chaîne 10 inclut des maillons 12. Les maillons 12 sont articulés les uns avec les autres de manière à former la chaîne 10. La chaîne 10 équipant le dispositif forme un organe de transmission de mouvement. Dans la suite, les maillons 12 sont identifiés par un indice 1 à N depuis le maillon de queue $12_1$ jusqu'au maillon de tête $12_N$ portant une platine d'accroche. L'indice n vise un maillon $12_n$ ou la pièce d'un maillon $12_n$. Dans ce contexte, le terme maillon doit être compris comme le motif mécanique élémentaire reproduit à l'identique le long de la chaîne 10. Le maillon $12_n$ est relié à un maillon $12_{n-1}$ d'une part et à un maillon $12_{n+1}$ d'autre part, avec $1 < n < N$.

Au cours de la montée, c'est-à-dire en rotation horaire du pignon 1, un maillon $12_n$ appartient successivement à la portion magasin 10c, à la portion courbe 10b puis à la portion droite 10a de la chaîne 10, et inversement lors de la descente.

Le dispositif comprend également un guide 20 stationnaire. Le guide 20 forme une surface de roulement pour les galets de guidage 171 décrits ci-après. Le guide 20 peut comprendre une pièce formant une surface de roulement réalisée en matériau à faible usure. Le guide 20 présente une première portion droite correspondant à la portion droite 10a, une deuxième portion droite correspondant à la portion magasin 10c et une portion courbe 10b correspondant à la portion courbe 10b. Le guide 20 offre une surface de roulement dirigée vers l'extérieur, la portion courbe 10b étant convexe. La portion courbe 10b se raccorde à la première portion droite à une extrémité et à la deuxième portion droite à l'autre extrémité de manière lisse, autrement dit sans point singulier de la dérivée. La portion courbe 10b forme un organe de renvoi. Dans le mode de réalisation représenté, la portion courbe 10b est en demi-cercle à rayon constant.

Lorsque le pignon 1 est en rotation antihoraire, la chaîne 10 est poussée vers le magasin de stockage par chacune des dents 2 au contact de la chaîne 10. Lorsque le pignon 1 est en rotation horaire, la chaîne 10 est poussée par chacune des dents 2 de la chaîne 10 vers le haut et tirée hors du magasin. Il se produit une prise de contact en début d'engrènement et une sortie de contact en fin d'engrènement, la portion droite 10a étant chargée.

La chaîne 10 peut être du type décrit dans FR 2 780 472 auquel le lecteur est invité à se reporter.

La chaîne 10 comprend une pluralité de maillons 12 successifs. Les maillons 12 sont articulés autour de barreaux 11 formant des axes transversaux. Chaque maillon 12 comprend deux joues essentiellement parallèles ou deux paires de plaquettes 121 parallèles. Chaque plaquette 121 est percée de trois trous de réception des axes d'articulation et de deux échancrures formant des demi-trous. Chaque plaquette 121 définit une face active transversale avant et une face active transversale arrière pour prendre appui respectivement sur une face active transversale arrière d'une plaquette 121 de maillon antérieur et une face active transversale avant d'une plaquette 121 de maillon postérieur lorsque les maillons 12 sont en ligne droite, notamment au sein de la portion droite 10a de la chaîne 10. Chaque plaquette 121 est disposée dans un plan YZ. L'une des plaquettes 121 est montée à l'intérieur du maillon, l'autre plaquette 121 est montée à l'extérieur du maillon, et ce symétriquement par rapport à un plan YZ. La plaquette 121 intérieure voisine avec la plaquette 121 extérieure du même maillon est articulée sur un barreau 11 en commun. Ladite plaquette 121 intérieure voisine avec une plaquette 121 extérieure du maillon voisin est articulée sur un autre barreau 11 en commun. Lesdits barreaux en commun sont disposés du côté opposé au pignon 1. Du côté du pignon 1, chaque barreau 11 est lié à une plaquette 121, alternativement intérieure et extérieure.

Les axes ou barreaux d'articulation des maillons 12 sont munis à chacune de leurs extrémités de galets de guidage 171. Les galets de guidage 171 sont situés à l'extérieur des plaquettes 121. Les galets de guidage 171 coopèrent avec des rails de guidage latéraux prévus sur des flasques latéraux d'un carter faisant partie du guide 20 dans les portions de poussée et magasin, et avec un organe de renvoi dans la portion de liaison.

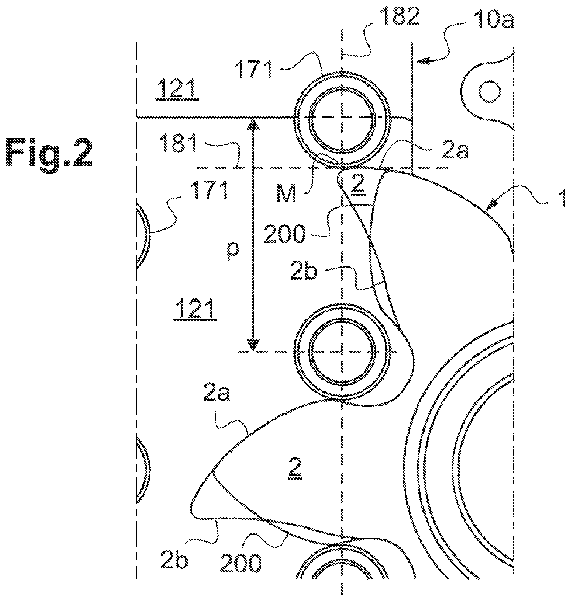

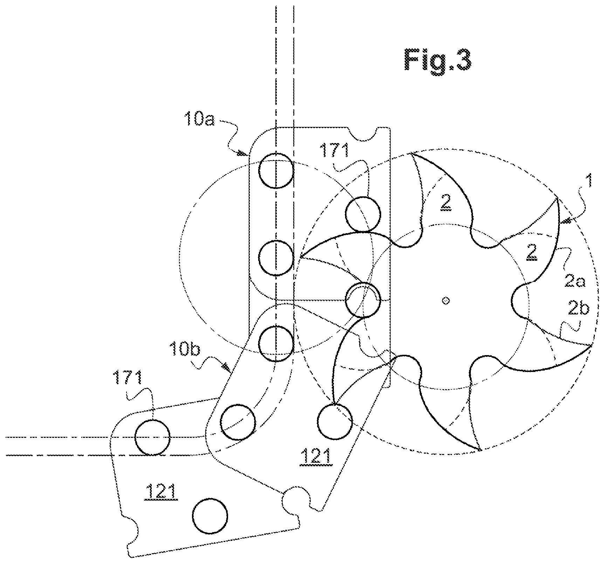

Pour une lisibilité accrue, le profil des dents conventionnelles 200 a aussi été représenté sur les figures. Sur la figure 3, le profil des dents 2 a été allongé à un maximum théorique de rayon appelé rayon extérieur et correspondant à l'intersection du bord d'attaque 2a et du bord de fuite 2b. Le rayon maximum est égal à la distance entre l'axe de rotation du pignon 1 et la surface extérieure des galets 171 de la rangée de galets distale du pignon 1. Si le rayon maximum était supérieur à ladite distance, alors il y aurait interférence entre les dents 2 et les galets 171 de la rangée de galets opposée au pignon 1. En pratique, une marge de sécurité est prise. Le rayon réel du pignon 1 est choisi inférieur au rayon maximum d'une distance F de plusieurs millimètres. On évite ainsi un angle vif entre le flanc d'attaque 2a et le flanc de fuite 2b dangereux pour les opérateurs et on arrondit l'extrémité des dents 2 comme sur les figures 1 et 2. Un autre moyen d'éviter une telle interférence est de monter l'axe de rotation du pignon 1 plus près du plan limite 30 entre la portion droite 10a et la portion courbe 10b. La figure 3 permet d'appréhender que la longueur développée du bord d'attaque 2a puisse être supérieure à 70% du rayon primitif, préférablement à 95%, plus préférablement supérieure à 130%.

Dans un mode de réalisation, le flanc d'attaque 2a à profil en développante de cercle s'arrête à la croisée de l'axe passant par le centre du congé concave de la dent 2 suivante. Ceci évite un recouvrement géométrique d'une dent 2 sur sa suivante. Un tel recouvrement est néanmoins possible en alternative en jouant sur les dimensions de joue de chaine selon l'axe Z.

En pratique, le diamètre maximal Dmax d'un pignon selon l'invention à n dents et à pas de chaîne p équivaut au Dmax d'un pignon standard symétrique à n/2 dents et à pas de chaîne 2p.

La longueur du profil en développante de cercle d'une dent 2 d'un pignon 1 selon l'invention à n dents équivaut donc à la longueur du profil en développante de cercle d'une dent symétrique d'un pignon connu à n/2 dents et à pas de chaîne 2p.

Le pignon 1 selon l'invention possède une portance de dent 2 aussi longue que celle d'une dent ayant un pas doublé mais a un diamètre primitif divisé par deux.

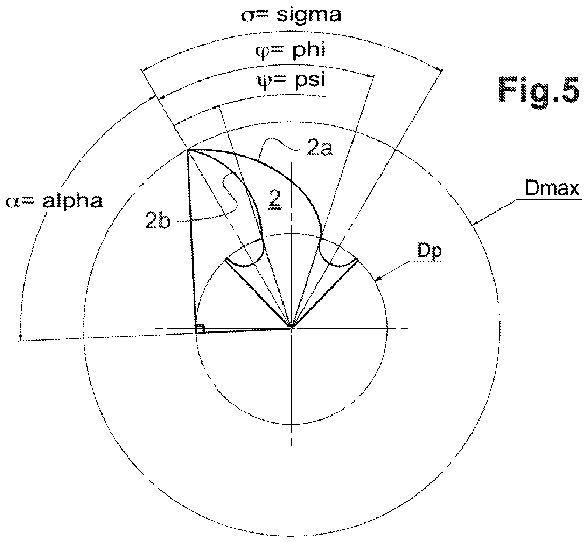

Pour la compréhension des figures 4 à 7, on nomme les variables suivantes:

[Tableau 2]

| Désignation | Définition | Unité | Calcul |
|---|---|---|---|
| n | Nombre de dents de pignon | | |
| sigma | Angle dent à dent | ° | $$sigma = \frac{360}{n}$$ |
| phi | Angle géométrique de la développante de cercle | ° | $phi = sigma - ps_i$ |
| psi | Angle - départ de la développante de cercle / centre du cercle intermédiaire | ° | |
| alpha | Angle de construction permettant de déterminer l'extrémité de la développante de cercle et correspondant à la portance linéaire | ° | $alpha = \tan(alpha)$ $- inv(alpha)$ |
| epsilon | Angle de rotation du pignon correspondant à une portance linéaire de dent | ° | $epsilon = alpha + phi$ |
| A | Arc de cercle correspondant à l'angle $\psi$ | mm | |
| C | Longueur de corde correspondant à l'arc a (= r) | mm | |
| Dp | Diamètre primitif du pignon | mm | |
| Dmax | Diamètre Maxi du pignon (Rmax le rayon) | mm | $$D_{max} = 2 \times \frac{R_p}{\cos(alpha)}$$ |
| Rp | Rayon primitif du pignon | mm | |
| Rci | Rayon du cercle intermédiaire entre deux dents (passage du galet) | mm | |
| Rr | Rayon de renvoi à 90° | mm | |
| Zp | Largeur de passage pour la dent | mm | |
| p | Pas de chaîne | mm | |
| $P_l$ | Portance linéaire d'une dent | mm | |

Le tableau suivant compare les variables trigonométriques obtenues suivant les formules ci-dessus entre un pignon d'engrènement 1 selon l'invention et un pignon conventionnel. Le pas p, le nombre n de dents, le rayon du cercle intermédiaire entre deux dents Rci sont des paramètres d'entrée. Le diamètre primitif Dp du pignon et l'augmentation Delta PI de portance linéaire PI entre un pignon d'engrènement 1 selon l'invention par rapport à un pignon conventionnel sont calculés à partir des paramètres d'entrée. Les distances sont exprimées en mm.

[Tableau 3]

| p | n | Rci | Dp | delta PI | Epsilon Sigma |
|---|---|-----|-----|----------|---------------|
| 20 | 5 | 5 | 31,8 | 74% | 46,03 |
| 20 | 6 | 5 | 38,2 | 71% | 46,74 |
| 20 | 7 | 5 | 44,6 | 69% | 46,87 |
| 20 | 8 | 5 | 50,9 | 66% | 46,73 |
| 20 | 9 | 5 | 57,3 | 65% | 46,46 |

| | | | | | |
|---|---|---|---|---|---|
| 20 | 10 | 5 | 63,7 | 63% | 46,07 |
| 20 | 11 | 5 | 70,0 | 62% | 45,62 |
| 20 | 12 | 5 | 76,4 | 61% | 45,18 |
| 20 | 13 | 5 | 82,8 | 61% | 44,74 |
| 20 | 14 | 5 | 89,1 | 60% | 44,27 |
| 20 | 15 | 5 | 95,5 | 59% | 43,80 |
| 20 | 24 | 5 | 152,8 | 55% | 40,11 |
| 20 | 48 | 5 | 305,6 | 50% | 34,06 |
| 30 | 5 | 9 | 47,7 | 86% | 41,49 |
| 30 | 6 | 9 | 57,3 | 82% | 42,79 |
| 30 | 7 | 9 | 66,8 | 79% | 43,39 |
| 30 | 8 | 9 | 76,4 | 76% | 43,58 |
| 30 | 9 | 9 | 85,9 | 74% | 43,54 |
| 30 | 10 | 9 | 95,5 | 73% | 43,36 |
| 30 | 11 | 9 | 105,0 | 72% | 43,09 |
| 30 | 12 | 9 | 114,6 | 70% | 42,78 |
| 30 | 13 | 9 | 124,1 | 70% | 42,45 |
| 30 | 14 | 9 | 133,7 | 69% | 42,08 |
| 30 | 15 | 9 | 143,2 | 68% | 41,71 |
| 30 | 24 | 9 | 229,2 | 64% | 38,58 |
| 30 | 48 | 9 | 458,4 | 59% | 32,91 |
| 40 | 5 | 9 | 63,7 | 70% | 48,27 |
| 40 | 6 | 9 | 76,4 | 67% | 48,68 |
| 40 | 7 | 9 | 89,1 | 64% | 48,60 |
| 40 | 8 | 9 | 101,9 | 62% | 48,32 |
| 40 | 9 | 9 | 114,6 | 61% | 47,89 |
| 40 | 10 | 9 | 127,3 | 60% | 47,41 |

| | | | | | |
|---|---|---|---|---|---|
| 40 | 11 | 9 | 140,1 | 59% | 46,91 |
| 40 | 12 | 9 | 152,8 | 58% | 46,34 |
| 40 | 13 | 9 | 165,5 | 57% | 45,87 |
| 40 | 14 | 9 | 178,3 | 56% | 45,30 |
| 40 | 15 | 9 | 191,0 | 55% | 44,82 |
| 40 | 24 | 9 | 305,6 | 52% | 40,90 |
| 40 | 48 | 9 | 611,2 | 47% | 34,64 |
| 50 | 5 | 11 | 79,6 | 69% | 48,72 |
| 50 | 6 | 11 | 95,5 | 66% | 49,06 |
| 50 | 7 | 11 | 111,4 | 64% | 48,96 |
| 50 | 8 | 11 | 127,3 | 62% | 48,63 |
| 50 | 9 | 11 | 143,2 | 60% | 48,18 |
| 50 | 10 | 11 | 159,2 | 59% | 47,68 |
| 50 | 11 | 11 | 175,1 | 57% | 47,13 |
| 50 | 12 | 11 | 191,0 | 57% | 46,61 |
| 50 | 13 | 11 | 206,9 | 56% | 46,06 |
| 50 | 14 | 11 | 222,8 | 55% | 45,56 |
| 50 | 15 | 11 | 238,7 | 55% | 45,01 |
| 50 | 24 | 11 | 382,0 | 51% | 41,09 |
| 50 | 48 | 11 | 763,9 | 47% | 34,67 |
| 80 | 5 | 16 | 127,3 | 66% | 50,50 |
| 80 | 6 | 16 | 152,8 | 63% | 50,60 |
| 80 | 7 | 16 | 178,3 | 61% | 50,31 |
| 80 | 8 | 16 | 203,7 | 59% | 49,86 |
| 80 | 9 | 16 | 229,2 | 58% | 49,31 |
| 80 | 10 | 16 | 254,6 | 56% | 48,73 |
| 80 | 11 | 16 | 280,1 | 55% | 48,14 |

| | | | | | |
|---|---|---|---|---|---|
| 80 | 12 | 16 | 305,6 | 54% | 47,53 |
| 80 | 13 | 16 | 331,0 | 54% | 46,98 |
| 80 | 14 | 16 | 356,5 | 53% | 46,40 |
| 80 | 15 | 16 | 382,0 | 52% | 45,83 |
| 80 | 24 | 16 | 611,2 | 49% | 41,70 |
| 80 | 48 | 16 | 1222,3 | 46% | 35,19 |
| 100 | 5 | 20 | 159,2 | 66% | 50,50 |
| 100 | 6 | 20 | 191,0 | 63% | 50,60 |
| 100 | 7 | 20 | 222,8 | 61% | 50,31 |
| 100 | 8 | 20 | 254,6 | 59% | 49,86 |
| 100 | 9 | 20 | 286,5 | 58% | 49,31 |
| 100 | 10 | 20 | 318,3 | 56% | 48,73 |
| 100 | 11 | 20 | 350,1 | 55% | 48,14 |
| 100 | 12 | 20 | 382,0 | 54% | 47,53 |
| 100 | 13 | 20 | 413,8 | 54% | 46,98 |
| 100 | 14 | 20 | 445,6 | 53% | 46,40 |
| 100 | 15 | 20 | 477,5 | 52% | 45,83 |
| 100 | 24 | 20 | 763,9 | 49% | 41,70 |
| 100 | 48 | 20 | 1527,9 | 46% | 35,19 |
| 150 | 5 | 30 | 238,7 | 66% | 50,50 |
| 150 | 6 | 30 | 286,5 | 63% | 50,60 |
| 150 | 7 | 30 | 334,2 | 61% | 50,31 |
| 150 | 8 | 30 | 382,0 | 59% | 49,86 |
| 150 | 9 | 30 | 429,7 | 58% | 49,31 |
| 150 | 10 | 30 | 477,5 | 56% | 48,73 |
| 150 | 11 | 30 | 525,2 | 55% | 48,14 |
| 150 | 12 | 30 | 573,0 | 54% | 47,53 |

| 150 | 13 | 30 | 620,7 | 54% | 46,98 |
|-----|-----|-----|--------|------|--------|
| 150 | 14 | 30 | 668,5 | 53% | 46,40 |
| 150 | 15 | 30 | 716,2 | 52% | 45,83 |
| 150 | 24 | 30 | 1145,9 | 49% | 41,70 |
| 150 | 48 | 30 | 2291,8 | 46% | 35,19 |

Augmentation de la portance

Les résultats ci-dessus montrent clairement que la portance d'une dent 2 de pignon 1 selon l'invention est plus importante que celle d'une dent de pignon conventionnel, permettant ainsi une plus grande multiplicité des contacts simultanés entre les dents 2 du pignon 1 et les galets 171 de la chaîne de poussée 10, tout en évitant d'augmenter le nombre de dents 2 du pignon 1 et donc son diamètre primitif.

Sur la figure 4, les dents 2 ont été allongées au maximum tout en évitant une interférence avec les galets 171 de la rangée intérieure. Le gain de portance linéaire du bord d'attaque 2a est d'au moins 60%. La portance linéaire peut être comprise entre 80 et 1000 mm, notamment supérieure à 120 mm, préférablement supérieure à 180 mm, notamment pour 12 dents, voire à 300 mm pour 24 dents.

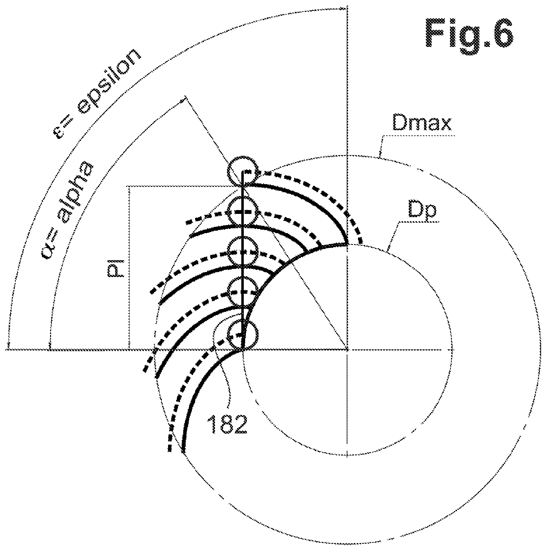

Sur la figure 6, la portance linéaire a été allongée au maximum tout en évitant une interférence avec les galets 171 de la rangée intérieure, ce pour une chaîne de poussée 10 à rangées de galets 171 plus écartées. Le gain de portance linéaire du bord d'attaque 2a est d'au moins 80%. Augmenter la distance entre les rangées de galets 171 est intéressant pour augmenter la portance angulaire. Ceci peut conduire à augmenter la largeur des joues, d'où une inertie et une stabilité accrues. La largeur des joues Lj est comprise entre 30 et 150 mm, préférablement entre 40 et 120 mm.

La demanderesse a identifié plusieurs paramètres reflétant l'invention et permettant une comparaison quantitative. La différence epsilon - sigma traduit l'accroissement de la portance unitaire d'une dent. La différence epsilon - sigma d'un pignon selon l'invention est supérieure à 34°, plus préférablement supérieure à 40°. Pour des pignons d'au plus 12 dents, la différence epsilon - sigma peut être supérieure à 46°. Pour des pignons d'au plus 6 dents, la différence epsilon - sigma peut être supérieure à 49°.

Sur la figure 7, la hauteur H définissant la position verticale du pignon 1 par rapport à la limite 30 entre la partie courbe 10b et la partie droite 10a a été représentée. Cette hauteur est comprise entre 0 et un pas et demi. La hauteur H est dépendante de la définition des paramètres Lj, Dmax et R pour que la développante de cercle de la dent 2 puisse passer librement entre chaque galet 171 distant d'un pas variable Pv, variant en raison du pivotement des joues dans la portion courbe. Le pas variable Pv est présent au moins dans la zone encadrée par un rectangle incliné en trait fin sur la figure 7. Le pas est constant dans la ou les portions droites. Dans la portion courbe, le pas augmente en partant de la portion droite, atteint un maximum en plateau ou en pic et décroit en se rapprochant la portion magasin.

L'ensemble de transmission peut prendre la forme d'un module ou d'un kit de montage en pièces détachées. Par exemple, deux châssis identiques équipés d'entraînement identiques peuvent être compatibles avec des magasins et/ou des chaînes de différentes longueurs. Un kit peut comprendre plusieurs chaînes ou des maillons optionnels à ajouter/retirer.

L'invention ne se limite pas aux ensembles de transmission et machineries décrits ci-avant, seulement à titre d'exemples, mais elle englobe toutes les variantes que pourra envisager l'homme de l'art..

**Revendications**

1.   Dispositif de chaîne de poussée, comprenant une chaîne (10) de poussée comprenant une portion droite (10a) selon un axe et une portion courbe (10b), la chaîne comprenant des maillons (12) articulés sur des axes, un guide (20) de chaîne de poussée, un pignon d'entraînement (1) pourvu de dents (2) en prise avec la chaîne de poussée, le pignon d'entraînement (1) étant en contact avec la chaîne de poussée par des surfaces (2a) de contact en développante de cercle, lesdites surfaces (2a) de contact appartenant aux dents (2), une dent (2) engrenant la chaîne (10) en définissant une ligne d'action présentant un angle avec l'axe de la portion droite (10a) compris entre -10° et 10°, la ligne d'action étant décalée par rapport aux axes d'articulation de maillons (12), **caractérisé en ce que** le pignon d'entraînement (1) est en contact avec la portion droite (10a) et sans contact avec la portion courbe (10b), le pignon d'entraînement (1) est monté à rotation sur un axe situé du côté de la chaîne de poussée opposé au centre de courbure de la portion courbe (10b), et lesdites surfaces (2a) de contact de chaque dent (2) comprennent une surface avant convexe dirigée vers la portion droite (10a) lorsque la dent (2) est en prise et une surface arrière dirigée vers la portion courbe lorsque la dent (2) est en prise, la surface avant convexe occupant un angle supérieur à la moitié de l'angle occupé par la dent (2), et l'axe du pignon (1) est disposé, le long de l'axe de la portion droite (10a), dans une zone comprise entre une limite entre la portion courbe (10b) et la portion droite (10a) et une distance maximale par rapport à ladite limite (30), une dent (2) exerçant un effort de poussée sur un angle epsilon de rotation du pignon (1) et présentant un angle sigma d'une dent à une dent suivante avec sigma égal à 360°/n, n étant le nombre de dents du pignon (1), et la différence epsilon-sigma est supérieure à 30°.

2.  Dispositif selon la revendication 1, dans lequel la chaîne de poussée comprend des surfaces de roulement ou des surfaces de glissement en contact avec les dents (2), le pignon d'entraînement (1) est unique ou des pignons d'entraînement sont montés sur le même arbre, et la différence epsilon - sigma est supérieure à 34°, plus préférablement supérieure à 40°, voire à 46° pour des pignons d'au plus 12 dents, à 49 pour des pignons d'au plus 6 dents.

3.  Dispositif selon l'une des revendications précédentes, dans lequel, la dimension radiale des dents (2) est choisie de façon qu'au moins deux surfaces avant dudit pignon d'entraînement (1) sont en contact simultané avec la chaîne (10) de poussée sur un angle d'au moins 200° pour un pignon à 5 dents, d'au moins 250° pour un pignon à 6 dents, d'au moins 300° pour un pignon à 7 dents, d'au moins 340° pour un pignon à 8 dents, et qu'au moins trois surfaces avant dudit pignon d'entraînement (1) sont en contact simultané avec la chaîne (10) de poussée sur un angle d'au moins 20° pour un pignon à 9 dents, d'au moins 60° pour un pignon à 10 ou 11 dents, d'au moins 140° pour un pignon à 12 dents, d'au moins 180° pour un pignon ayant de 13 à 15 dents, d'au moins 260° pour un pignon ayant de 16 à 24 dents, d'au moins 360° pour un pignon ayant de 25 à 48 dents.

4.  Dispositif selon l'une des revendications précédentes, dans lequel le pignon d'entraînement (1) est unique ou des pignons d'entraînement sont montés sur le même arbre.

5.  Dispositif selon l'une des revendications précédentes, dans lequel la chaîne de poussée comprend des maillons et des axes sur lesquels les maillons sont montés, les axes étant en contact avec les dents (2), au moins deux des dents (2) du pignon d'entraînement (1) étant en contact avec un axe dans la portion droite (10a) , le nombre de dents (2) du pignon (1) étant d'au moins 8, voire 9, l'axe dans la portion droite (10a) et l'axe dans la portion courbe (10b) étant de rangs voisins.

6.  Dispositif selon l'une des revendications précédentes, dans lequel l'axe du pignon d'entraînement (1) est disposé selon l'axe de la portion droite (10a), dans un intervalle compris entre l'extrémité inférieure de la portion droite (10a) et l'extrémité inférieure de la portion droite (10a) augmentée de la longueur d'un maillon de la chaîne de poussée, de préférence entre l'extrémité inférieure de la portion droite (10a) et l'extrémité inférieure de la portion droite (10a) augmentée de 150% de la longueur d'un maillon de la chaîne de poussée.

7.  Dispositif selon l'une des revendications précédentes, dans lequel le guide (20) de chaîne de poussée est disposé du côté de la chaîne de poussée opposé au pignon d'entraînement (1), le guide (20) présente une surface rectiligne de guidage de la chaîne de poussée et un guide supplémentaire est disposé sur l'extérieur de la partie courbe (10b).

8.  Dispositif selon l'une des revendications précédentes, dans lequel l'effort exercé par une des dents (2) sur la chaîne de poussée est transféré sur la dent (2) suivante sur une course de rotation du pignon d'entraînement (1) d'au moins 40° par tour pour un pignon à 6 dents, 25° par tour pour un pignon à 12 dents, 16° par tour pour un pignon à 24 dents,12° par tour pour un pignon à 48 dents.

9.  Dispositif selon l'une des revendications précédentes, dans lequel la surface avant convexe est dépourvue de méplat, chaque dent (2) présente une pointe arrondie et un axe radial la pointe arrondie étant décalée angulairement par rapport à l'axe vers la portion courbe (10b) et la surface arrière est convexo-concave.

10. Dispositif selon l'une des revendications précédentes, dans lequel le pignon d'entraînement (1) est pourvu de 5 à 30 dents (2) à profil en développante de cercle, monté à rotation autour d'un axe, et la chaîne (10) comprend des barreaux (11), l'un au moins des barreaux (11) étant en prise avec le pignon d'entraînement (1), et le pignon d'entraînement (1) comprend une denture droite présentant un module m compris entre 3 et 64 millimètres.

11. Dispositif selon l'une des revendications précédentes, dans lequel le pignon d'entraînement (1) présente une portance linéaire comprise entre 80 et 1000 mm, un angle (phi) occupé par le flanc d'attaque de la dent supérieur à 5 degrés, préférablement supérieur à 11 degrés, plus préférablement supérieur à 23 degrés, un positionnement du pignon en hauteur H compris entre 0 et 1,5 pas et une largeur des joues Lj comprise entre 40 et 120 mm.

**Patentansprüche**

1. Schubkettenvorrichtung, umfassend eine Schubkette (10), die einen geraden Abschnitt (10a) entlang einer Achse und einen gekrümmten Abschnitt (10b) umfasst, wobei die Kette Glieder (12) umfasst, die an Achsen angelenkt sind, eine Schubkettenführung (20), ein Antriebsritzel (1) mit Zähnen (2), die in Eingriff mit der Schubkette stehen, wobei das Antriebsritzel (1) durch kreisförmige Evolventenkontaktflächen (2a) mit der Schubkette in Kontakt steht, wobei die Kontaktflächen (2a) zu den Zähnen (2) gehören, wobei ein Zahn (2), der mit der Kette (10) in Eingriff steht, indem er eine Wirkungslinie definiert, einen Winkel mit der Achse des geraden Abschnitts (10a) zwischen -10° und 10° aufweist, wobei die Wirkungslinie in Bezug auf die Gelenkachsen von Gliedern (12) versetzt ist, **dadurch gekennzeichnet, dass** das Antriebsritzel (1) mit dem geraden Abschnitt (10a) in Kontakt steht und mit dem gekrümmten Abschnitt (10b) nicht in Kontakt steht, wobei das Antriebsritzel (1) drehbar auf einer Achse montiert ist, die sich auf der Seite der Schubkette befindet, die dem Krümmungszentrum des gekrümmten Abschnitts (10b) gegenüberliegt, und die Kontaktflächen (2a) jedes Zahns (2) eine konvexe vordere Fläche umfassen, die zum geraden Abschnitt (10a) zeigt, wenn der Zahn (2) in Eingriff ist, und eine hintere Fläche, die zum gekrümmten Abschnitt zeigt, wenn der Zahn (2) in Eingriff ist, wobei die konvexe vordere Fläche einen Winkel einnimmt, der größer ist als die Hälfte des Winkels, den der Zahn (2) einnimmt, und die Ritzelachse (1) entlang der Achse des geraden Abschnitts (10a) in einem Bereich zwischen einer Grenze zwischen dem gekrümmten Abschnitt (10b) und dem geraden Abschnitt (10a) und einem maximalen Abstand zu dieser Grenze (30) angeordnet ist, wobei ein Zahn (2) eine Schubkraft auf einen Epsilon-Drehwinkel des Ritzels (1) ausübt und einen Sigma-Winkel von einem Zahn zu einem nachfolgenden Zahn aufweist, wobei der Sigma-Winkel gleich 360°/n ist, wobei n die Anzahl der Zähne des Ritzels (1) ist, und die Epsilon-Sigma-Differenz größer als 30° ist.

2. Vorrichtung nach Anspruch 1, wobei die Schubkette Laufflächen oder Gleitflächen umfasst, die mit den Zähnen (2) in Kontakt stehen, das Antriebsritzel (1) einzeln ist oder Antriebsritzel auf derselben Welle montiert sind, und die Epsilon-Sigma-Differenz größer als 34°, besonders bevorzugt größer als 40° oder sogar 46° für Zahnräder mit höchstens 12 Zähnen, oder 49 für Zahnräder mit höchstens 6 Zähnen ist.

3. Vorrichtung nach einem der vorhergehenden Ansprüche, wobei die radiale Abmessung der Zähne (2) so gewählt ist, dass mindestens zwei vordere Flächen des Antriebsritzels (1) gleichzeitig mit der Schubkette (10) in einem Winkel von mindestens 200° bei einem Ritzel mit 5 Zähnen, von mindestens 250° bei einem Ritzel mit 6 Zähnen, von mindestens 300° bei einem Ritzel mit 7 Zähnen, von mindestens 340° bei einem Ritzel mit 8 Zähnen in Kontakt stehen, und dass mindestens drei vordere Flächen des Antriebsritzels (1) gleichzeitig mit der Schubkette (10) in einem Winkel von mindestens 20° bei einem Ritzel mit 9 Zähnen, von mindestens 60° bei einem Ritzel mit 10 oder 11 Zähnen, von mindestens 140° bei einem Ritzel mit 12 Zähnen, von mindestens 180° bei einem Ritzel mit 13 bis 15 Zähnen, von mindestens 260° bei einem Ritzel mit 16 bis 24 Zähnen, von mindestens 360° bei einem Ritzel mit 25 bis 48 Zähnen in Kontakt stehen.

4. Vorrichtung nach einem der vorhergehenden Ansprüche, wobei das Antriebsritzel (1) einzeln ist oder Antriebsritzel auf derselben Welle montiert sind.

5. Vorrichtung nach einem der vorhergehenden Ansprüche, wobei die Schubkette Glieder und Achsen umfasst, auf denen die Glieder montiert sind, wobei die Achsen mit den Zähnen (2) in Kontakt stehen, wobei mindestens zwei der Zähne (2) des Antriebsritzels (1) mit einer Achse im geraden Abschnitt (10a) in Kontakt stehen, wobei die Anzahl der Zähne (2) des Ritzels (1) mindestens 8 oder sogar 9 beträgt, wobei die Achse im geraden Abschnitt (10a) und die Achse im gekrümmten Abschnitt (10b) benachbarte Reihen sind.

6. Vorrichtung nach einem der vorhergehenden Ansprüche, wobei die Achse des Antriebsritzels (1) entlang der Achse des geraden Abschnitts (10a) in einem Abstand zwischen dem unteren Ende des geraden Abschnitts (10a) und dem unteren Ende des geraden Abschnitts (10a), das um die Länge eines Gliedes der Schubkette vergrößert ist, vorzugsweise zwischen dem unteren Ende des geraden Abschnitts (10a) und dem unteren Ende des geraden Abschnitts (10a), das um 150 % der Länge eines Glieds der Schubkette vergrößert ist, angeordnet ist.

7. Vorrichtung nach einem der vorhergehenden Ansprüche, wobei die Schubkettenführung (20) auf der dem Antriebsritzel (1) gegenüberliegenden Seite der Schubkette angeordnet ist, die Führung (20) eine gerade Führungsfläche der Schubkette aufweist, und eine zusätzliche Führung außen am gekrümmten Teil (10b) angeordnet ist.

8. Vorrichtung nach einem der vorhergehenden Ansprüche, wobei die von einem der Zähne (2) auf die Schubkette ausgeübte Kraft auf den nachfolgenden Zahn (2) über einen Drehweg des Antriebsritzels (1) von mindestens 40° pro Umdrehung bei einem Ritzel mit 6 Zähnen, 25° pro Umdrehung bei einem Ritzel mit 12 Zähnen, 16° pro Umdrehung bei einem Ritzel mit 24 Zähnen, 12° pro Umdrehung bei einem Ritzel mit 48 Zähnen übertragen wird.

9. Vorrichtung nach einem der vorhergehenden Ansprüche, wobei die konvexe vordere Fläche keine Abflachung aufweist, wobei jeder Zahn (2) eine abgerundete Spitze und eine radiale Achse aufweist, wobei die abgerundete Spitze winkelförmig zur Achse in Richtung des gekrümmten Abschnitts (10b) versetzt ist, und die hintere Fläche konvex-konkav ist.

10. Vorrichtung nach einem der vorhergehenden Ansprüche, wobei das Antriebsritzel (1) mit 5 bis 30 Zähnen (2) mit einem kreisförmigen Evolventenprofil versehen ist, das um eine Achse rotierend montiert sind, und die Kette (10) Sprossen (11) umfasst, wobei mindestens eine der Sprossen (11) in Eingriff mit dem Antriebsritzel (1) steht, und das Antriebsritzel (1) eine gerade Verzahnung mit einem Modul m zwischen 3 und 64 Millimetern umfasst.

11. Vorrichtung nach einem der vorhergehenden Ansprüche, wobei das Antriebsritzel (1) eine lineare Tragfähigkeit zwischen 80 und 1000 mm, einen von der Vorderkante des Zahns eingenommenen Winkel (phi) von mehr als 5 Grad, vorzugsweise mehr als 11 Grad, besonders bevorzugt mehr als 23 Grad, eine Positionierung der Ritzelhöhe H zwischen 0 und 1,5 Teilung und eine Breite der Flansche Lj zwischen 40 und 120 mm aufweist.

## Claims

1. A thrust chain device, comprising a thrust chain (10) comprising a straight portion (10a) along an axis and a curved portion (10b), the chain comprising links (12) hinged on axes, a thrust chain guide (20), a driving sprocket (1) provided with teeth (2) engaging the thrust chain, the driving sprocket (1) being in contact with the thrust chain through involute contact surfaces (2a), said contact surfaces (2a) belonging to the teeth (2), a tooth (2) meshing with the chain (10) by defining a line of action having an angle with the axis of the straight portion (10a) of between -10° and 10°, the line of action being offset with respect to the hinge axes of links (12), **characterised in that** the driving sprocket (1) is in contact with the straight portion (10a) and without contact with the curved portion (10b), the driving sprocket (1) is rotatably mounted to an axis located on the side of the thrust chain opposite to the centre of curvature of the curved portion (10b), and said contact surfaces (2a) of each tooth (2) comprise a convex front surface directed towards the straight portion (10a) when the tooth (2) is engaged and a rear surface directed towards the curved portion when the tooth (2) is engaged, the convex front surface occupying an angle greater than half the angle occupied by the tooth (2), and the axis of the sprocket (1) is disposed, along the axis of the straight portion (10a), in a zone between a boundary between the curved portion (10b) and the straight portion (10a) and a maximum distance from said boundary (30), a tooth (2) exerting a thrust force on an angle of rotation epsilon of the sprocket (1) and having an angle sigma from one tooth to a next tooth with sigma equal to 360°/n, n being the number of teeth of the sprocket (1), and the epsilon-sigma difference is greater than 30°.

2. The device according to claim 1, wherein the thrust chain comprises rolling surfaces or sliding surfaces in contact with the teeth (2), the driving sprocket (1) is a single sprocket or driving sprockets are mounted to the same shaft, and the epsilon-sigma difference is greater than 34°, more preferably greater than 40° or even 46° for sprockets with at most 12 teeth, than 49 for sprockets with at most 6 teeth.

3. The device according to one of the preceding claims, wherein the radial dimension of the teeth (2) is chosen so that at least two front surfaces of said driving sprocket (1) are in simultaneous contact with the thrust chain (10) over an angle of at least 200° for a 5-tooth sprocket, at least 250° for a 6-tooth sprocket, at least 300° for a 7-tooth sprocket, at least 340° for an 8-tooth sprocket, and that at least three front surfaces of said driving sprocket (1) are in simultaneous contact with the thrust chain (10) over an angle of at least 20° for a 9-tooth sprocket, at least 60° for a 10- or 11-tooth sprocket, at least 140° for a 12-tooth sprocket, at least 180° for a 13- to 15-tooth sprocket, at least 260° for a 16- to 24-tooth sprocket, at least 360° for a 25- to 48- tooth sprocket.

4. The device according to one of the preceding claims, wherein the driving sprocket (1) is a single sprocket or driving sprockets are mounted to the same shaft.

5. The device according to one of the preceding claims, wherein the thrust chain comprises links and axes on which the links are mounted, the axes being in contact with the teeth (2), at least two of the teeth (2) of the driving sprocket (1) being in contact with an axis in the straight portion (10a), the number of teeth (2) of the sprocket (1) being at least 8 or even 9, the axis in the straight portion (10a) and the axis in the curved portion (10b) being of neighbouring ranks.

6. The device according to one of the preceding claims, wherein the axis of the driving sprocket (1) is disposed along the axis of the straight portion (10a), in an interval between the lower end of the straight portion (10a) and the lower end of the straight portion (10a) increased by the length of a link of the thrust chain, preferably between the lower end of the straight portion (10a) and the lower end of the straight portion (10a) increased by 150% of the length of a thrust chain link.

7. The device according to any of the preceding claims, wherein the thrust chain guide (20) is disposed on the side of the thrust chain opposite to the driving sprocket (1), the guide (20) has a rectilinear thrust chain guiding surface, and an additional guide is disposed outwardly of the curved portion (10b).

8. The device according to one of the preceding claims, wherein the force exerted by one of the teeth (2) on the thrust chain is transferred to the next tooth (2) over a rotation stroke of the driving sprocket (1) of at least 40° per revolution for a 6-tooth sprocket, 25° per revolution for a 12-tooth sprocket, 16° per revolution for a 24-tooth sprocket, 12° per revolution for a 48-tooth sprocket.

9. The device according to one of the preceding claims, wherein the convex front surface is flat-free, each tooth (2) has a rounded tip and a radial axis, the rounded tip being angularly offset from the axis towards the curved portion (10b), and the rear surface is convex-concave.

10. The device according to one of the preceding claims, wherein the driving sprocket (1) is provided with 5 to 30 involute teeth (2), rotatably mounted about an axis, and the chain (10) comprises bars (11), at least one of the bars (11) being engaging the driving sprocket (1), and the driving sprocket (1) comprises spur teeth with a modulus m of between 3 and 64 millimetres.

11. The device according to one of the preceding claims, wherein the driving sprocket (1) has a linear bearing capacity of between 80 and 1000 mm, an angle (phi) occupied by the leading edge of the tooth of greater than 5 degrees, preferably greater than 11 degrees, more preferably greater than 23 degrees, a positioning of the sprocket in height H of between 0 and 1.5 pitch and a width of the flanges Lj of between 40 and 120 mm.

**Fig.1**

**Fig.2**

Fig.3

10a

171

1

2

2

2a

2b

10b

171

121

121

Fig.4

Fig.5

Fig.6

Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1006074 A1
- FR 2786476
- FR 2780472
- FR 3061753